# EUROPEAN PATENT APPLICATION

(11) **EP 4 443 830 A1**
(43) Date of publication of application: **09.10.2024**
(21) Application number: 22900339.7
(22) Date of filing: 23.11.2022
(51) Int. Cl.: H04L 41/0823

(54) **AI MODEL SWITCHING PROCESSING METHOD AND APPARATUS, AND COMMUNICATION DEVICE**

(30) Priority: 30.11.2021 CN 202111450300
(71) Applicant: Vivo Mobile Communication Co., Ltd., Dongguan, Guangdong 523863 (CN)
(72) Inventor: YANG, Ang, Dongguan, Guangdong 523863 (CN); SUN, Peng, Dongguan, Guangdong 523863 (CN)
(74) Representative: Conti, Marco
(86) International application number: PCT/CN2022/133711
(87) International publication number: WO 2023/098534

(57) **Abstract**

This application discloses an Artificial Intelligence (AI) model switching processing method and apparatus, and a communication device, and belongs to the technical field of communications. The method includes: receiving, by a first communication device, switching indication information sent by a second communication device, where the switching indication information is used for indicating the first communication device to perform AI model switching; and in a case that there is a switching Gap in switching between a first AI model and a second AI model, executing, by the first communication device, a first operation in the switching Gap, where the first operation includes any one of the following: not performing calculation of the first AI model and the second AI model; stopping using an AI arithmetic unit; performing calculation of the first AI model, a calculation result being applicable or valid; performing calculation of the first AI model and/or the second AI model, a calculation result being inapplicable or invalid; and stopping using the AI arithmetic unit and a communication module associated with the AI arithmetic unit.

## Description

### CROSS-REFERENCE TO RELATED APPLICATIONS

This application claims priority to Chinese Patent Application No. 202111450300.6 filed on Tuesday, November 30, 2021, which is incorporated herein by reference in its entirety.

### TECHNICAL FIELD

This application belongs to the technical field of communications, and particularly relates to an Artificial Intelligence (AI) model switching processing method and apparatus, and a communication device.

### BACKGROUND

Currently, Artificial Intelligence (Artificial Intelligence, AI) has been widely applied to every field. There are many implementations, for example, a neural network, a decision-making tree, a support vector machine, a Bayesian classifier and etc., for an AI model.

By taking the neural network as an example (but the specific type of the AI model is not defined), the neural network includes neurons. Parameters of the neural network are optimized by ways of an optimization algorithm. The optimization algorithm is a kind of algorithm that minimizes or maximizes a target function (or referred to as a loss function). The target function is a mathematical combination of the parameters and data of the model. For example, given data X and a label Y corresponding to the data, a neural network model f(.) is constructed. When there is the model, a predicted output f(x) may be obtained according to an input x, and a difference (f(x)-Y) between a predicted value and a true value may be calculated. This model is the loss function. The optimization algorithm is intended to find out appropriate parameters, such that a value of the loss function is minimized. The less the loss value is, the closer the model to a true situation is.

At present, common optimization algorithms all fundamentally based on an error back propagation algorithm. A basic thought of the error back propagation algorithm is that a learning process includes two processes: forward propagation of signals and back propagation of errors. During the forward propagation, an inputted sample is propagated from an input layer, and is propagated to an output layer after being processed by hidden layers layer by layer. If an actual output of the output layer does not accord with an expected output, the forward propagation is turned to a back propagation stage of errors. Back propagation of errors means that an output error is back-propagated to the input layer through the hidden layers layer by layer in certain form and is allotted to all units of each layer to obtain an error signal of the unit in each layer. The error signal is a basis for correcting a weight of each unit. The process of adjusting the weight of each layer in signal forward propagation and error back propagation is performed in cycle. A process of continuously adjusting the weight is a learning training process of the network. This process is performed all the time until the error outputted by the network is decreased to an acceptable extent or until a preset learning number of times is achieved.

During AI model switching, hardware such as a Neural Network Processing Unit (Neural Network Processing Unit, NPU), a Graphics Processing Unit (Graphics Processing Unit, GPU) and a Field Programmable Gate Array (Field Programmable Gate Array, FPGA) may be affected. AI model switching also takes time, and a novel AI model cannot take effect immediately. In the prior art, behaviors of a communication device during AI model switching are not restricted, which is likely to cause a communication chaos.

### SUMMARY

Embodiments of this application relate to an Artificial Intelligence (AI) model switching processing method and apparatus, and a communication device, which can solve a problem of an easily induced communication chaos because behaviors of the communication device during AI model switching are not restricted.

In a first aspect, provided is an AI model switching processing method, including:
receiving, by a first communication device, switching indication information sent by a second communication device, where the switching indication information is used for indicating the first communication device to perform AI model switching; and
in a case that there is a switching Gap in switching between a first AI model and a second AI model, executing, by the first communication device, a first operation in the switching Gap, where the first operation includes any one of the following:
not performing calculation of the first AI model and the second AI model;
stopping using an AI arithmetic unit;
performing calculation of the first AI model, a calculation result being applicable or valid;
performing calculation of the first AI model and/or the second AI model, a calculation result being inapplicable or invalid; and
stopping using the AI arithmetic unit and a communication module associated with the AI arithmetic unit.

In a second aspect, provided is an Artificial Intelligence (AI) model switching processing method, including:
sending, by a second communication device, the configuration information of the switching Gap to the first communication device, where the configuration information of the switching Gap includes at least one of the following:
a content of the first operation, where the first operation is an operation of switching, by the first communication device, the switching Gap between the first AI model and the second AI model;
a content of the second operation, where the second operation is an operation of the first communication device in a case that there is no switching Gap or the switching Gap is ended;
a start time of the switching Gap;
an end time of the switching Gap;
a duration of the switching Gap;
a period of the switching Gap;
whether there is the switching Gap; and
a communication process applicable to the switching Gap.

In a third aspect, provided is an AI model switching processing apparatus, including:
a receiving module, configured to receive switching indication information sent by a second communication device, where the switching indication information is used for indicating the first communication device to perform AI model switching; and
a first executing module, configured to, in a case that there is a switching Gap in switching between a first AI model and a second AI model, execute a first operation in the switching Gap, where the first operation includes any one of the following:
not performing calculation of the first AI model and the second AI model;
stopping using an AI arithmetic unit;
performing calculation of the first AI model, a calculation result being applicable or valid;
performing calculation of the first AI model and/or the second AI model, a calculation result being inapplicable or invalid; and
stopping using the AI arithmetic unit and a communication module associated with the AI arithmetic unit.

In a fourth aspect, provided is an AI model switching processing apparatus, including:
a sending module, configured to send the configuration information of the switching Gap to a first communication device, wherein the configuration information of the switching Gap comprises at least one of the following:
a content of a first operation, where the first operation is an operation of the first communication device in the switching Gap;
a content of a second operation, where the second operation is an operation of the first communication device in a case that there is no switching Gap or the switching Gap is ended;
a start time of the switching Gap;
an end time of the switching Gap;
a duration of the switching Gap;
a period of the switching Gap;
whether there is the switching Gap; and
a communication process applicable to the switching Gap.

In a fifth aspect, provided is a communication device. The terminal includes a processor and a memory, the memory storing programs or instructions runnable on the processor, where the programs or the instructions, when executed by the processor, implement the steps of the method in the first aspect or the steps of the method in the second aspect.

In a sixth aspect, provided is a communication device, including a processor and a communication interface, where the communication interface is configured to receive switching indication information sent by a second communication device, the switching indication information being used for indicating the first communication device to perform AI model switching; and a processor is configured to, in a case that there is a switching Gap in switching between a first AI model and a second AI model, execute a first operation in the switching Gap, where the first operation includes any one of the following:
not performing calculation of the first AI model and the second AI model;
stopping using an AI arithmetic unit;
performing calculation of the first AI model, a calculation result being applicable or valid;
performing calculation of the first AI model and/or the second AI model, a calculation result being inapplicable or invalid; and
stopping using the AI arithmetic unit and a communication module associated with the AI arithmetic unit.

In a seventh aspect, provided is a communication device, including a processor and a communication interface, where the communication interface is configured to send the configuration information of the switching Gap to the first communication device, the configuration information of the switching Gap including at least one of the following:
a content of the first operation, where the first operation is an operation of switching, by the first communication device, the switching Gap between the first AI model and the second AI model;
a content of the second operation, where the second operation is an operation of the first communication device in a case that there is no switching Gap or the switching Gap is ended;
a start time of the switching Gap;
an end time of the switching Gap;
a duration of the switching Gap;
a period of the switching Gap;
whether there is the switching Gap; and
a communication process applicable to the switching Gap.

In an eighth aspect, provided is a wireless communication system, including: a first communication device and a second communication device, where the first communication device may be configured to execute the steps of the method in the first aspect and the second communication device may be configured to execute the steps of the method in the second aspect.

In a ninth aspect, provided is a computer readable storage medium, storing programs or instructions, where the programs or the instructions, when executed by the processor, implement the steps of the method in the first aspect or the steps of the method in the second aspect.

In a tenth aspect, provided is a chip, including a processor and a communication interface, where the communication interface is coupled to the processor, and the processor is configured to run programs or instructions to implement the method in the first aspect or the method in the second aspect.

In an eleventh aspect, provided is a computer program/program product, stored in a storage medium, where the computer program/program product is executed by at least one processor to implement the steps of the method in the first aspect or the steps of the method in the second aspect

In the embodiments of this application, the second communication device indicates the first communication device to perform AI model switching. In a case that there is the switching Gap in the AI model switching, the operation of the first communication device in the switching Gap is restricted, the influence of the AI model switching on the communication system is reduced, and the performance of the AI model in the communication system is improved, so that the system performance is improved.

### BRIEF DESCRIPTION OF THE DRAWINGS

FIG. 1 is a block diagram of a wireless communication system to which an embodiment of this application can be applied;
FIG. 2 is a first step flowchart of an Artificial Intelligence (AI) model switching processing method provided in an embodiment of this application;
FIG. 3 is a second step flowchart of the AI model switching processing method provided in the embodiment of this application;
FIG. 4 is a schematic structural diagram of an AI model switching processing apparatus provided in an embodiment of this application;
FIG. 5 is another schematic structural diagram of the AI model switching processing apparatus provided in the embodiment of this application;
FIG. 6 is a schematic structural diagram of a communication device provided in an embodiment of this application;
FIG. 7 is a schematic structural diagram of a terminal provided in an embodiment of this application; and
FIG. 8 is a schematic structural diagram of a network-side device provided in an embodiment of this application.

### DETAILED DESCRIPTION

The technical solutions in embodiments of this application are clearly and completely described in the following with reference to the drawings in the embodiments of this application. Apparently, the described embodiments are merely some rather than all of the embodiments of this application. All other embodiments obtained by those of ordinary skill in the art based on the embodiments of this application fall within the protection scope of this application.

The specification and claims of this application, and terms "first" and "second" are used to distinguish similar objects, but are unnecessarily used to describe a specific sequence or order. It is to be understood that the terms used in this way are exchangeable in a proper case, so that the embodiments of this application can be implemented in an order different from the order shown or described herein, and objects distinguished by "first" and "second" are usually of the same category and the number of the objects is not defined. For example, there may be one or more first objects. In addition, "and/or" in the specification and claims represents at least one of connected objects, and the character "/" usually represents that previous and next associated objects form an "or" relationship.

It is worth noting that the technologies described in this embodiment of this application are not limited to the Long Term Evolution (Long Term Evolution, LTE)/LTE-advanced (LTE-advanced, LTE-A) system, and may further be applied to various wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" in this embodiment of this application are usually interchangeably used, and the technologies described can be applied to the systems and radio technologies mentioned above, and can also be applied to other systems and radio technologies. For an exemplary purpose, a New Radio (New Radio, NR) system is described in the following description, and the term NR is used in most description below. However, these technologies can also be applied to other applications besides the NR system, for example, a 6th generation (6th Generation, 6G) communication system.

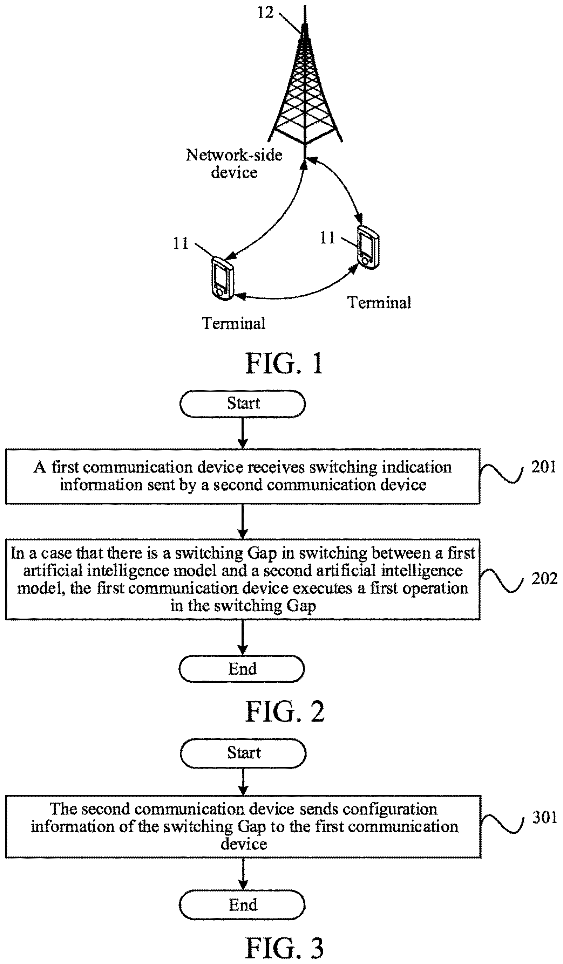

FIG. 1 is a block diagram of a wireless communication system to which an embodiment of this application can be applied. The wireless communication system includes a terminal 11 and a network-side device 12. The terminal 11 may be terminal side devices such as a mobile phone, a Tablet Personal Compute (Tablet Personal Computer), a Laptop Computer (Laptop Computer) or a notebook computer, a Personal Digital Assistant (Personal Digital Assistant, PDA), a Handheld computer, a notebook, an Ultra-Mobile Person Computer (Ultra-Mobile Person Computer, UMPC), a Mobile Internet Device (Mobile Internet Device, MID), an Augmented Reality (Augmented Reality, AR)/Virtual Reality (virtual reality, VR) device, a robot, a wearable device, a Vehicle User Equipment (Vehicle User Equipment, VUE), a Pedestrian User Equipment (Pedestrian User Equipment, PUE), a smart home (a smart home with a wireless communication function, for example, a refrigerator, a television, a washer or furniture), a game machine, a Personal Computer (Personal Computer, PC), an automatic teller machine or a self-service machine, the wearable device including: a smart watch, a smart bracelet, a smart earphone, smart eyeglasses, smart jewelry (a smart bangle, a smart chain bracelet, a smart ring, a smart necklace, a smart anklet, a smart anklet chain and the like), a smart wristband, smart clothing, a game machine and the like. It is to be noted that in the embodiments of this application, a specific type of the terminal 11 is not limited. The network-side device 12 may include an access network device or a core network device, where the access network device may also be referred to as a wireless access network device, a Radio Access Network (Radio Access Network, RAN), a wireless access network function or a wireless access network unit. The access network device may include a base station, a Wireless Local Area Network (Wireless Local Area Network, WLAN) access point or a Wireless Fidelity (Wireless Fidelity, WiFi) node and etc. The base station may also be referred to as a node B, an evolution node B(eNB), an access point, a Base Transceiver Station (Base Transceiver Station, BTS), a radio base station, a radio transceiver, a Basic Service Set (Basic Service Set, BSS), an Extended Service Set (Extended Service Set, ESS), a household node B, a household evolution node B, a Transmitting Receiving Point (Transmitting Receiving Point, TRP) or some other appropriate terms in the field as long as the same technical effect is achieved. The base station is not limited to the appointed technical vocabularies. It is to be noted that the base station in the NR system is taken as an example only in the embodiment of this application, but the specific type of the base station is not limited.

The AI model switching processing method and apparatus, and the communication device provided in the embodiment of this application are described in detail below in conjunction with drawings through some embodiments and application scenarios thereof.

Referring to FIG.2, FIG. 2 is a step flowchart of an AI model switching processing method provided in at least one embodiment of this application. The AI model switching processing method includes:
S201: a first communication device receives switching indication information sent by a second communication device, where the switching indication information is used for indicating the first communication device to perform AI model switching;
optionally, the switching indication information includes: information of a second AI model (indirectly indicating that the first communication device is switched from a first AI model to the second AI model); and/or the switching indication information includes: indication information 1 indicating that the first communication device uses the second AI model; and/or the switching indication information includes: indication information 2 indicating that the first AI model of the first communication device is inapplicable or the first AI model is replaced; and/or the switching indication information includes: indication information 3 indicating that the first communication device replaces the first AI model with the second AI model;.
S202: in a case that there is a switching Gap in switching between the first AI model and the second AI model, the first communication device executes a first operation in the switching Gap, where the first operation includes any one of the following:
   calculation of the first AI model and the second AI model is not performed; and
   using an AI arithmetic unit is stopped; that is, the first AI model and the second AI model cannot be calculated, and the AI models of other modules cannot be calculated; optionally, in a case that the first communication device has a plurality of AI arithmetic units, the step of stopping using an AI arithmetic unit refers to stopping using the AI arithmetic unit to which the first AI model belongs and/or stopping using the AI arithmetic unit to which the second AI model belongs; optionally, in a case that the first communication device has the plurality of AI arithmetic units, the AI models of other modules cannot be calculated, which means that the AI models of other modules included in the AI arithmetic unit to which the first AI model belongs cannot be calculated, and/or the AI models of other modules included in the AI arithmetic unit to which the second AI model belongs cannot be calculated;
   calculation of the first AI model is performed, a calculation result (the calculation result is a result outputted by the first AI model) being applicable or valid;
   calculation of the first AI model and/or the second AI model is performed, a calculation result being inapplicable or invalid; and that is, the result outputted by the first AI model and/or the result outputted by the second AI model are both invalid;
   using the AI arithmetic unit and a communication module associated with the AI arithmetic unit is stopped; optionally, the communication module associated with the AI arithmetic unit may be construed as a communication module requiring intermediate information or output information of the AI arithmetic unit or a communication module requiring the output information which is one of the input information or one of the input information of the AI arithmetic unit; optionally, in a case that the first communication device has the plurality of AI arithmetic units, using the AI arithmetic unit and the communication module associated with the AI arithmetic unit is stopped, which means that using the AI arithmetic unit to which the first AI model belongs to and the communication module associated with the AI arithmetic unit is stopped, and/or using the AI arithmetic unit to which the second AI model belongs to and the communication module associated with the AI arithmetic unit is stopped.

In the embodiment of this application, the first communication device may be a network-side device or a terminal, and the second communication device may be a network-side device or a terminal. In a typical scenario, the first communication device is the terminal, and the second communication device is the network-side device; in another typical scenario, the first communication device is the network-side device, and the second communication device is the terminal; in yet another typical scenario, the first communication device and the second communication device are respectively different nodes of a network side; and in yet another typical scenario, the first communication device and the second communication device are respectively different terminal devices.

Optionally, the first AI model is an AI model originally used by the first communication device or an AI model currently used by the first communication device. The second AI model is an AI model prepared to replace the "first AI model".

As an optional embodiment, the second AI model may be issued by the second communication device, may also be predetermined by a protocol or may be self-owned or customized by the first communication device, which is not specifically limited herein.

It is to be noted that the AI arithmetic unit is used for operation or reasoning or running or calculation of the AI model and may be a unit, a module, a chip or hardware, which is not specifically limited herein.

In at last one embodiment of this application, the first operation is that calculation of the first AI model and the second AI model are not performed or calculation of the first AI model and/or the second AI model are performed, and in a case that the calculation result is inapplicable or invalid, the first operation further includes at least one of the following:
calculation is performed by using a non-AI algorithm corresponding to the first AI model; and
calculation is performed by using a non-AI algorithm corresponding to the second AI model.

The "non-AI algorithm corresponding to the first AI model" may be construed as a non-AI algorithm capable to implement a function of the first AI model; and the "non-AI algorithm corresponding to the second AI model" may be construed as a non-AI algorithm capable to implement a function of the second AI model.

In another optional embodiment of this application, in a case that the first operation is that calculation of the first AI model and the second AI model is not performed, besides the first AI model and the second AI model, other resources of the AI arithmetic unit of the first communication device may be used. Optionally, in a case that the first communication device has the plurality of AI arithmetic units, other resources of the AI arithmetic unit of the first communication device may be used, which means that other resources of the AI arithmetic unit to which the first AI model belongs may be used, and/or other resources of the AI arithmetic unit to which the second AI model belongs may be used.

In at least one embodiment of this application, the method further includes:

in a case that there is no switching Gap in switching between the first AI model and the second AI model (also referred to as 0 switching Gap) or the switching Gap is ended, the first communication device executes a second operation, where the second operation includes any one of the following:
calculation is performed by using the second AI model; optionally, the first AI model is no longer used, the first AI model may be stored in a first communication device side, or the first AI model may be deleted;
first indication information applicable to the second AI model is sent to the second communication device, and calculation is performed by using the second AI model behind X1 time units; and
the first indication information applicable to the second AI model is sent to the second communication device, confirmation information of the first indication information is received, and calculation is performed by using the second AI model upon receiving X2 time units of the confirmation information,
where the X1 and X2 are both greater than or equal to 0.

In at least one embodiment of this application, the method further includes:
the first communication device determines configuration information of the switching Gap, and the configuration information of the switching Gap includes at least one of the following:
a content of the first operation;
a content of the second operation;
a start time of the switching Gap;
an end time of the switching Gap;
a duration of the switching Gap;
a period of the switching Gap;
whether there is the switching Gap; and
a communication process applicable to the switching Gap.

Optionally, the step that the first communication device determines the configuration information of the switching Gap includes:
the first communication device receives the configuration information of the switching Gap indicated by the second communication device; where the second communication device determines the configuration information of the switching Gap according to the first information.

Or, the step that the first communication device determines the configuration information of the switching Gap includes:
the first communication device sends a Gap request message to the second communication device according to a function request of another communication device, and receives the configuration information of the switching Gap returned by the second communication device; optionally, the first communication device side stores a plurality of AI models, and requests the second communication device for the Gap based on a function request of another communication device except for the second communication device. For example, switching in different AI models is located under a locating request of a Location Management Function (LMF).

Or, the step that the first communication device determines the configuration information of the switching Gap includes:
the first communication device sends the configuration information of the switching Gap to the second communication device; optionally, the configuration information of the switching Gap sent by the first communication device to the second communication device is the configuration information of the switching Gap expected by the first communication device.

Or, the step that the first communication device determines the configuration information of the switching Gap includes:
the first communication device determines the used configuration information of the switching Gap according to a preengagement.

Or, the step that the first communication device determines the configuration information of the switching Gap includes:
the first communication device determines a plurality of pieces of configuration information of the switching Gap according to the preengagement, and receives the indication of the first communication device and determines the used configuration information of the switching Gap.

For example, the second communication device indicates which Gap configuration information shall be used by the first communication device as needed in actual use. Optionally, some of the multiple gap configuration information is short in delay correspondingly and some is less in power consumption correspondingly.

For another example, a Network Data Analytics Function (Network Data Analytics Function, NWDAF) presets a pool for the configuration information of the switching Gap (including multiple configuration information of the switching Gap), and then the base station indicates which configuration information of the switching Gap in the pool for the configuration information of the switching Gap shall be used.

In at least one embodiment of this application, the method further includes:
the first communication device determines whether there is the switching Gap between the first AI model and the second AI model and/or the duration of the switching Gap,
where the first information includes at least one of the following:
type difference information of the first AI model and the second AI model;
structural difference information of the first AI model and the second AI model;
parameter variable quantities of the first AI model and the second AI model;
a total capability or a total resource of the AI arithmetic unit of the first communication device; and
a surplus capability or a surplus resource of the AI arithmetic unit of the first communication device.

Optionally, the switching Gap of the AI model of the same type is less than the switching Gap of the AI model of different types.

Optionally, for the AI model of the same type or the AI model with a type difference less than a first threshold, the switching Gap is not needed.

For example, the type of the AI model includes: a fully connected neural network, a convolutional neural network, a recurrent neural network, a long short-term memory network, a decision-making tree, a Bayesian algorithm, a support vector machine, a random forest, a Gaussian random process and the like, which are not enumerated herein.

Optionally, the switching Gap of the AI model of the same type is less than the switching Gap of the AI model of different structures.

Optionally, the switching Gap of the AI model with a less structural difference is less than the switching Gap of the AI model with a greater structural difference.

Optionally, for the AI model of the same structure or the AI model with the structural difference less than a second threshold, the switching Gap is not needed.

For example, by taking the neural network as an example, the structure of the AI model includes a number of layers, a quantity of neurons in each layer, whether fully connected layers or convolutional layers, a type of an activation function, and whether a special module (such as an attention module and a memory unit) is used.

Optionally, the switching Gap of the AI model with a less parameter variable quantity is less than the switching Gap of the AI model with a greater parameter variable quantity.

Optionally, in a case that the parameter variable quantity of the AI model is less than a certain threshold, the switching Gap is not needed.

Optionally, in a case that the type and/or the structure are same and the parameter variable quantity is less than a third threshold, the switching Gap is not needed.

Optionally, in a case that the type difference is less than the first threshold and/or the structural difference is less than the second threshold, and the parameter variable quantity is less than the third threshold, the switching Gap is not needed.

Optionally, the greater the total capability is or the more the total resource of the AI arithmetic unit of the first communication device is, the less the switching Gap is. The first threshold, the second threshold and the third threshold are associated with the total capability or the total resource.

The "surplus capability or the surplus resource of the AI arithmetic unit of the first communication device" may be construed as the surplus capability/resource after other functional modules (communication modules and non-communication modules) occupy the capability/resource of the AI arithmetic unit. Optionally, the higher the surplus capability is/the more the surplus resource is, the less the switching Gap is. The first threshold, the second threshold and the third threshold are associated with the surplus capability or the surplus resources.

As an optional embodiment, the capability or the resource of the AI arithmetic unit includes at least one of the following:
an arithmetic capacity (such as multiplication and addition);
computability or computing power;
floating point computing power; for example, Floating-Point Operations Per Second (Floating-Point Operations Per Second, FLOPS), floating-point operation numbers of times executed per second, where the floating-point arithmetic includes arithmetics where decimals are involved, which wastes time more than integer arithmetic; TFLOPS (Tops) is usually used as an index to measure performance/computing power of the NPU/GPU, for example, the computing power of a certain chip is 1.7 Tops arithmetic performance of the neural network;
a process count;
a thread count;
a memory;
storage space;
a cache;
input channel information such as a bandwidth of an input channel, a rate, and a channel quantity/bit/byte read/written/transmitted simultaneously; and
output channel information such as a bandwidth of an output channel, a rate, and a channel quantity/bit/byte read/written/transmitted simultaneously.

In at least one embodiment of this application, the method further includes:
in a case that the first information meets a preset condition, the first communication device sends the first information to the second communication device; for example, the preset condition is: whether at least one of the contents included in the first information exceeds the threshold, or whether at least one of the contents varies, or the variable quantity of at least one of the contents exceeds the threshold;
   or,
in a case that target triggering is met, the first communication device sends the first information to the second communication device; for example, the second communication device indicates and/or protocols information such as a specific content, a period and a trigger event of the first information. In a case that the surplus capability/resource of the first communication device reporting the AI arithmetic unit varies, the length of the pre-configured switching Gap is no longer appropriate, and it is needed to adjust the length of the switching Gap, the first communication device reports the first information;
   or,
the first communication device periodically sends the first information to the second communication device; for example, the second communication device indicates and/or protocols information such as a specific content, a period and a trigger event of the first information.

As an optional embodiment, the communication process applicable to the switching Gap includes at least one of the following:
cell switching;
cell redirecting;
Radio Resource Control (Radio Resource Control, RRC) reconfiguring;
RRC releasing;
RRC restoring;
RRC rebuilding;
RRC building;
gap measuring; and
gap configuration measuring.

Correspondingly, in the above communication process, the duration of the switching Gap is less than or equal to any one of the following:
a cell switching delay;
a cell redirecting delay;
an RRC reconfiguring delay;
an RRC rebuilding delay;
an RRC building delay; and
a time span for measuring the gap.

Correspondingly, the step that the first communication device determines the configuration information of the switching Gap includes:

the first communication device determines the configuration information of the switching Gap according to a first message, that is, the first message carries the configuration information of the switching Gap or the first message indicates the configuration information of the switching Gap, where the first message includes at least one of the following:
an RRC reconfiguring message;
an RRC releasing message;
an RRC restoring message;
an RRC rebuilding message; and
an RRC building message.

In an optional embodiment of this application, the start time of the switching Gap includes at least one of the following:
first time for indicating the first communication device to perform the AI model switching;
the X3^{th} time unit after the first time;
the X4^{th} time unit before the first time;
second time when the second AI model information is received;
the X5^{th} time unit after the second time;
the X6^{th} time unit before the second time;
third time when the confirmation information is sent after the second AI model information is received;
the X7^{th} time unit after the third time;
the X8^{th} time unit before the third time;
fourth time when the second communication device receives the confirmation information of the second AI model information;
the X9^{th} time unit after the fourth time;
the X10^{th} time unit before the fourth time;
fifth time when the first AI model is invalid;
the X11^{th} time unit after the fifth time;
the X12^{th} time unit before the fifth time;
sixth time when the second AI model is expected to be valid;
the X13^{th} time unit after the sixth time; and
the X14^{th} time unit before the sixth time,
where X3-X14 are all greater than or equal to 1.

In another optional embodiment of this application, the end time of the switching Gap includes at least one of the following:
seventh time obtained from the start time of the switching Gap + the duration of the switching Gap;
the X15^{th} time unit after the seventh time;
the X16^{th} time unit before the seventh time;
eighth time obtained from the start time of the switching Gap + the duration of the AI model switching;
the X17^{th} time unit after the eighth time;
the X18^{th} time unit before the eighth time;
ninth time when the AI model is switched;
the X19^{th} time unit after the ninth time;
the X20^{th} time unit before the ninth time;
tenth time of the first indication information applicable to the second AI model sent by the first communication device;
the X21^{th} time unit after the tenth time;
the X22^{th} time unit before the tenth time;
eleventh time when the second communication device receives the first indication information;
the X23^{th} time unit after the eleventh time;
the X24^{th} time unit before the eleventh time;
twelfth time when the second communication device feeds back the confirmation information after the first communication device sends the first indication information;
the X25^{th} time unit after the twelfth time;
the X26^{th} time unit before the twelfth time;
thirteenth time when the first communication device receives the confirmation information fed back by the second communication device after the first communication device sends the first indication information;
the X27^{th} time unit after the thirteenth time; and
the X28^{th} time unit before the thirteenth time,
where X15-X28 are all greater than or equal to 1.

In conclusion, in the embodiments of this application, the second communication device indicates the first communication device to perform AI model switching. In a case that there is the switching Gap in the AI model switching, the operation of the first communication device in the switching Gap is restricted, the influence of the AI model switching on the communication system is reduced, and the performance of the AI model in the communication system is improved, so that the system performance is improved.

Referring to FIG. 3, FIG. 3 is another step flowchart of the Artificial Intelligence (AI) model switching processing method provided in the embodiment of this application. The AI model switching processing method includes:

S301: the second communication device sends the configuration information of the switching Gap to the first communication device, where the configuration information of the switching Gap includes at least one of the following:
a content of the first operation, where the first operation is an operation of switching, by the first communication device, the switching Gap between the first AI model and the second AI model;
a content of the second operation, where the second operation is an operation of the first communication device in a case that there is no switching Gap or the switching Gap is ended;
a start time of the switching Gap;
an end time of the switching Gap;
a duration of the switching Gap;
a period of the switching Gap;
whether there is the switching Gap; and
a communication process applicable to the switching Gap.

Optionally, the first operation includes any one of the following:
the first communication device does not perform calculation of the first AI model and the second AI model;
the first communication device stops using the AI arithmetic unit; that is, the first AI model and the second AI model cannot be calculated, and the AI models of other modules cannot be calculated; optionally, in a case that the first communication device has a plurality of AI arithmetic units, the step of stopping using an AI arithmetic unit refers to stopping using the AI arithmetic unit to which the first AI model belongs and/or stopping using the AI arithmetic unit to which the second AI model belongs; optionally, in a case that the first communication device has the plurality of AI arithmetic units, the AI models of other modules cannot be calculated, which means that the AI models of other modules included in the AI arithmetic unit to which the first AI model belongs cannot be calculated, and/or the AI models of other modules included in the AI arithmetic unit to which the second AI model belongs cannot be calculated;
the first communication device performs calculation of the first AI model, a calculation result (the calculation result is a result outputted by the first AI model) being applicable or valid;
the first communication device calculates the first AI model and/or the second AI model, a calculation result being inapplicable or invalid; and that is, the result outputted by the first AI model and/or the result outputted by the second AI model are both invalid;
the first communication device stops using the AI arithmetic unit and a communication module associated with the AI arithmetic unit; optionally, the communication module associated with the AI arithmetic unit may be construed as a communication module requiring intermediate information or output information of the AI arithmetic unit or a communication module requiring the output information which is one of the input information or one of the input information of the AI arithmetic unit; optionally, in a case that the first communication device has the plurality of AI arithmetic units, using the AI arithmetic unit and the communication module associated with the AI arithmetic unit is stopped, which means that using the AI arithmetic unit to which the first AI model belongs to and the communication module associated with the AI arithmetic unit is stopped, and/or using the AI arithmetic unit to which the second AI model belongs to and the communication module associated with the AI arithmetic unit is stopped.

Optionally, the first AI model is an AI model originally used by the first communication device or an AI model currently used by the first communication device. The second AI model is an AI model prepared to replace the "first AI model".

As an optional embodiment, the second AI model may be issued by the second communication device, may also be predetermined by a protocol or may be self-owned or customized by the first communication device, which is not specifically limited herein.

In at last one embodiment of this application, the first operation is that calculation of the first AI model and the second AI model are not performed or calculation of the first AI model and/or the second AI model are performed, and in a case that the calculation result is inapplicable or invalid, the first operation further includes at least one of the following:
the first communication device performs calculation by using a non-AI algorithm corresponding to the first AI model; and
the first communication device performs calculation by using a non-AI algorithm corresponding to the second AI model.

The "non-AI algorithm corresponding to the first AI model" may be construed as a non-AI algorithm capable to implement a function of the first AI model; and the "non-AI algorithm corresponding to the second AI model" may be construed as a non-AI algorithm capable to implement a function of the second AI model.

In another optional embodiment of this application, in a case that the first operation is that calculation of the first AI model and the second AI model is not performed, besides the first AI model and the second AI model, other resources of the AI arithmetic unit of the first communication device may be used. Optionally, in a case that the first communication device has the plurality of AI arithmetic units, other resources of the AI arithmetic unit of the first communication device may be used, which means that other resources of the AI arithmetic unit to which the first AI model belongs may be used, and/or other resources of the AI arithmetic unit to which the second AI model belongs may be used.

In at least one embodiment of this application, the second operation includes at least one of the following:
the first communication device performs calculation by using the second AI model; optionally, the first AI model is no longer used, the first AI model may be stored in a first communication device side, or the first AI model may be deleted;
the first communication device sends first indication information applicable to the second AI model to the second communication device, and performs calculation by using the second AI model behind X1 time units; and
the first communication device sends the first indication information applicable to the second AI model to the second communication device, receives confirmation information of the first indication information, and performs calculation by using the second AI model upon receiving X2 time units of the confirmation information,
where the X1 and X2 are both greater than or equal to 0.

In at least one embodiment of this application, the method further includes:
the second communication device determines the configuration information of the switching Gap used by the first communication device according to a first information, where the first information includes at least one of the following:
type difference information of the first AI model and the second AI model;
structural difference information of the first AI model and the second AI model;
parameter variable quantities of the first AI model and the second AI model;
a total capability or a total resource of the AI arithmetic unit of the first communication device; and
a surplus capability or a surplus resource of the AI arithmetic unit of the first communication device.

Optionally, the switching Gap of the AI model of the same type is less than the switching Gap of the AI model of different types.

Optionally, for the AI model of the same type or the AI model with a type difference less than a first threshold, the switching Gap is not needed.

For example, the type of the AI model includes: a fully connected neural network, a convolutional neural network, a recurrent neural network, a long short-term memory network, a decision-making tree, a Bayesian algorithm, a support vector machine, a random forest, a Gaussian random process and the like, which are not enumerated herein.

Optionally, the switching Gap of the AI model of the same type is less than the switching Gap of the AI model of different structures.

Optionally, the switching Gap of the AI model with a less structural difference is less than the switching Gap of the AI model with a greater structural difference.

Optionally, for the AI model of the same structure or the AI model with the structural difference less than a second threshold, the switching Gap is not needed.

For example, by taking the neural network as an example, the structure of the AI model includes a number of layers, a quantity of neurons in each layer, whether fully connected layers or convolutional layers, a type of an activation function, and whether a special module (such as an attention module and a memory unit) is used.

Optionally, the switching Gap of the AI model with a less parameter variable quantity is less than the switching Gap of the AI model with a greater parameter variable quantity.

Optionally, in a case that the parameter variable quantity of the AI model is less than a certain threshold, the switching Gap is not needed.

Optionally, in a case that the type and/or the structure are same and the parameter variable quantity is less than a third threshold, the switching Gap is not needed.

Optionally, in a case that the type difference is less than the first threshold and/or the structural difference is less than the second threshold, and the parameter variable quantity is less than the third threshold, the switching Gap is not needed.

Optionally, the greater the total capability is or the more the total resource of the AI arithmetic unit of the first communication device is, the less the switching Gap is. The first threshold, the second threshold and the third threshold are associated with the total capability or the total resource.

The "surplus capability or the surplus resource of the AI arithmetic unit of the first communication device" may be construed as the surplus capability/resource after other functional modules (communication modules and non-communication modules) occupy the capability/resource of the AI arithmetic unit. Optionally, the higher the surplus capability is/the more the surplus resource is, the less the switching Gap is. The first threshold, the second threshold and the third threshold are associated with the surplus capability or the surplus resources.

Further, the method further includes:
the second communication device receives the first information sent by the first communication device.
In a case that the first information meets a preset condition, the first communication device sends the first information to the second communication device; for example, the preset condition is: whether at least one of the contents included in the first information exceeds the threshold, or whether at least one of the contents varies, or the variable quantity of at least one of the contents exceeds the threshold;
   or,
in a case that target triggering is met, the first communication device sends the first information to the second communication device; for example, the second communication device indicates and/or protocols information such as a specific content, a period and a trigger event of the first information. In a case that the surplus capability/resource of the first communication device reporting the AI arithmetic unit varies, the length of the pre-configured switching Gap is no longer appropriate, and it is needed to adjust the length of the switching Gap, the first communication device reports the first information;
   or,
the first communication device periodically sends the first information to the second communication device; for example, the second communication device indicates and/or protocols information such as a specific content, a period and a trigger event of the first information.

As an optional embodiment, the capability or the resource of the AI arithmetic unit includes at least one of the following:
an arithmetic capacity (such as multiplication and addition);
computability or computing power;
floating point computing power; for example, Floating-Point Operations Per Second (Floating-Point Operations Per Second, FLOPS), floating-point operation numbers of times executed per second, where the floating-point arithmetic includes arithmetics where decimals are involved, which wastes time more than integer arithmetic; TFLOPS (Tops) is usually used as an index to measure performance/computing power of the NPU/GPU, for example, the computing power of a certain chip is 1.7 Tops arithmetic performance of the neural network;
a process count;
a thread count;
a memory;
storage space;
a cache;
input channel information such as a bandwidth of an input channel, a rate, and a channel quantity/bit/byte read/written/transmitted simultaneously; and
output channel information such as a bandwidth of an output channel, a rate, and a channel quantity/bit/byte read/written/transmitted simultaneously.

As an optional embodiment, the communication process applicable to the switching Gap includes at least one of the following:
cell switching;
cell redirecting;
Radio Resource Control (RRC) reconfiguring;
RRC releasing;
RRC restoring;
RRC rebuilding;
RRC building;
gap measuring; and
gap configuration measuring.

Correspondingly, in the above communication process, the duration of the switching Gap is less than or equal to any one of the following:
a cell switching delay;
a cell redirecting delay;
an RRC reconfiguring delay;
an RRC rebuilding delay;
an RRC building delay; and
a time span for measuring the gap.

In an optional embodiment of this application, the start time of the switching Gap includes at least one of the following:
first time for indicating the first communication device to perform the AI model switching;
the X3^{th} time unit after the first time;
the X4^{th} time unit before the first time;
second time when the second AI model information is received;
the X5^{th} time unit after the second time;
the X6^{th} time unit before the second time;
third time when the confirmation information is sent after the second AI model information is received;
the X7^{th} time unit after the third time;
the X8^{th} time unit before the third time;
fourth time when the second communication device receives the confirmation information of the second AI model information;
the X9^{th} time unit after the fourth time;
the X10^{th} time unit before the fourth time;
fifth time when the first AI model is invalid;
the X11^{th} time unit after the fifth time;
the X12^{th} time unit before the fifth time;
sixth time when the second AI model is expected to be valid;
the X13^{th} time unit after the sixth time; and
the X14^{th} time unit before the sixth time,
where X3-X14 are all greater than or equal to 1.

In another optional embodiment of this application, the end time of the switching Gap includes at least one of the following:
seventh time obtained from the start time of the switching Gap + the duration of the switching Gap;
the X15^{th} time unit after the seventh time;
the X16^{th} time unit before the seventh time;
eighth time obtained from the start time of the switching Gap + the duration of the AI model switching;
the X17^{th} time unit after the eighth time;
the X18^{th} time unit before the eighth time;
ninth time when the AI model is switched;
the X19^{th} time unit after the ninth time;
the X20^{th} time unit before the ninth time;
tenth time of the first indication information applicable to the second AI model sent by the first communication device;
the X21^{th} time unit after the tenth time;
the X22^{th} time unit before the tenth time;
eleventh time when the second communication device receives the first indication information;
the X23^{th} time unit after the eleventh time;
the X24^{th} time unit before the eleventh time;
twelfth time when the second communication device feeds back the confirmation information after the first communication device sends the first indication information;
the X25^{th} time unit after the twelfth time;
the X26^{th} time unit before the twelfth time;
thirteenth time when the first communication device receives the confirmation information fed back by the second communication device after the first communication device sends the first indication information;
the X27^{th} time unit after the thirteenth time; and
the X28^{th} time unit before the thirteenth time,
where X15-X28 are all greater than or equal to 1.

As an optional embodiment, step S301 includes:
the second communication device sends a Gap request message sent by the first communication device; and
the second communication device sends the configuration information of the switching Gap to the first communication device according to the Gap request message.

Optionally, the first communication device side stores a plurality of AI models, and sends a Gap request message to the second communication device based on a function request of another communication device except for the second communication device; the second communication device feeds corresponding switching back to the first communication device based on the Gap request message. For example, the configuration information of the switching Gap in different AI models is located under a locating request of a Location Management Function (LMF).

In conclusion, in the embodiments of this application, the second communication device indicates the first communication device to perform AI model switching. In a case that there is the switching Gap in the AI model switching, the operation of the first communication device in the switching Gap is restricted, the influence of the AI model switching on the communication system is reduced, and the performance of the AI model in the communication system is improved, so that the system performance is improved.

An executing body for the AI model switching processing method provided in at least one embodiment of this application may be the AI model switching processing apparatus. By taking a situation that the AI model switching processing apparatus executes the AI model switching processing method in the embodiment of this application, the AI model switching processing apparatus provided in the embodiment of this application is described.

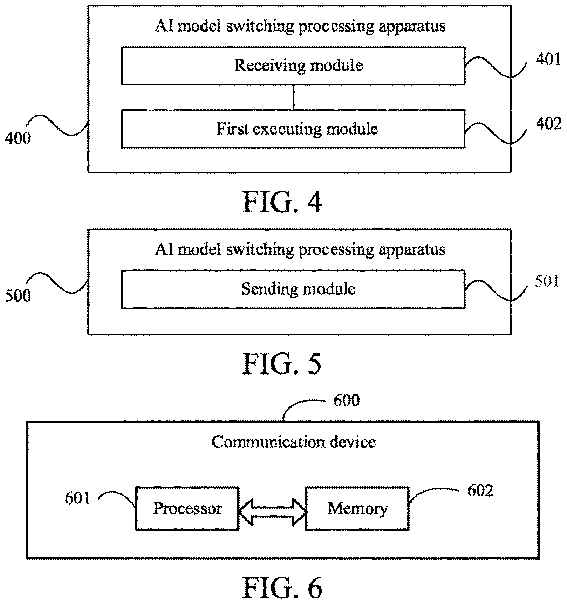

Referring to FIG. 4, FIG. 4 is a schematic structural diagram of the AI model switching processing apparatus 400 provided in the embodiment of this application. The AI model switching processing apparatus 400 includes:
a receiving module 401, configured to receive switching indication information sent by a second communication device, where the switching indication information is used for indicating the first communication device to perform AI model switching; and
a first executing module 402, configured to, in a case that there is a switching Gap in switching between a first AI model and a second AI model, execute a first operation in the switching Gap, where the first operation includes any one of the following:
calculation of the first AI model and the second AI model is not performed;
using an AI arithmetic unit is stopped;
calculation of the first AI model is performed, a calculation result being applicable or valid;
calculation of the first AI model and/or the second AI model is performed, a calculation result being inapplicable or invalid; and
using the AI arithmetic unit and a communication module associated with the AI arithmetic unit is stopped.

As an optional embodiment, the first operation further includes at least one of the following:
calculation is performed by using a non-AI algorithm corresponding to the first AI model; and
calculation is performed by using a non-AI algorithm corresponding to the second AI model.

As an optional embodiment, the apparatus further includes:

a second executing module, configured to, in a case that there is no switching Gap in switching between the first AI model and the second AI model or the switching Gap is ended, execute a second operation, where the second operation includes any one of the following:
calculation is performed by using the second AI model;
first indication information applicable to the second AI model is sent to the second communication device, and calculation is performed by using the second AI model behind X1 time units; and
the first indication information applicable to the second AI model is sent to the second communication device, confirmation information of the first indication information is received, and calculation is performed by using the second AI model upon receiving X2 time units of the confirmation information,
where the X1 and X2 are both greater than or equal to 0.
As an optional embodiment, the apparatus further includes:
a first determination module, configured to determine configuration information of the switching Gap, where the configuration information of the switching Gap comprises at least one of the following:
a content of the first operation;
a content of the second operation;
a start time of the switching Gap;
an end time of the switching Gap;
a duration of the switching Gap;
a period of the switching Gap;
whether there is the switching Gap; and
a communication process applicable to the switching Gap.

As an optional embodiment, the first determination module includes:
a first determination sub-module, configured to receive the configuration information of the switching Gap indicated by the second communication device;
or, configured to send a Gap request message to the second communication device according to a function request of another communication device, and configured to receive the configuration information of the switching Gap returned by the second communication device;
or, configured to send the configuration information of the switching Gap to the second communication device;
or, configured to determine the used configuration information of the switching Gap according to a preengagement;
or, configured to determine a plurality of pieces of configuration information of the switching Gap according to the preengagement, and receive the indication of the first communication device and determine the used configuration information of the switching Gap.

As an optional embodiment, the apparatus further includes:
a second determination sub-module, configured to determine whether there is the switching Gap between the first AI model and the second AI model and/or the duration of the switching Gap,
where the first information includes at least one of the following:
type difference information of the first AI model and the second AI model;
structural difference information of the first AI model and the second AI model;
parameter variable quantities of the first AI model and the second AI model;
a total capability or a total resource of the AI arithmetic unit of the first communication device; and
a surplus capability or a surplus resource of the AI arithmetic unit of the first communication device.

As an optional embodiment, the capability or the resource of the AI arithmetic unit includes at least one of the following:
an arithmetic capacity;
computability or computing power;
floating point computing power;
a process count;
a thread count;
a memory;
storage space;
a cache;
input channel information; and
output channel information.

As an optional embodiment, the apparatus further includes:
an information sending module, configured to, in a case that the first information meets a preset condition, send the first information to the second communication device;
or, configured to, in a case that target triggering is met, send the first information to the second communication device;
or, configured to periodically send the first information to the second communication device.

As an optional embodiment, the communication process applicable to the switching Gap includes at least one of the following:
cell switching;
cell redirecting;
Radio Resource Control (RRC) reconfiguring;
RRC releasing;
RRC restoring;
RRC rebuilding;
RRC building;
gap measuring; and
gap configuration measuring.

As an optional embodiment, the duration of the switching Gap is less than or equal to any one of the following:
a cell switching delay;
a cell redirecting delay;
an RRC reconfiguring delay;
an RRC rebuilding delay;
an RRC building delay; and
a time span for measuring the gap.

As an optional embodiment, the first determination module includes:
a second determination sub-module, configured to determine the configuration information of the switching Gap according to a first message, where the first message includes at least one of the following:
an RRC reconfiguring message;
an RRC releasing message;
an RRC restoring message;
an RRC rebuilding message; and
an RRC building message.

As an optional embodiment, the start time of the switching Gap includes at least one of the following:
first time for indicating the first communication device to perform the AI model switching;
the X3^{th} time unit after the first time;
the X4^{th} time unit before the first time;
second time when the second AI model information is received;
the X5^{th} time unit after the second time;
the X6^{th} time unit before the second time;
third time when the confirmation information is sent after the second AI model information is received;
the X7^{th} time unit after the third time;
the X8^{th} time unit before the third time;
fourth time when the second communication device receives the confirmation information of the second AI model information;
the X9^{th} time unit after the fourth time;
the X10^{th} time unit before the fourth time;
fifth time when the first AI model is invalid;
the X11^{th} time unit after the fifth time;
the X12^{th} time unit before the fifth time;
sixth time when the second AI model is expected to be valid;
the X13^{th} time unit after the sixth time; and
the X14^{th} time unit before the sixth time,
where X3-X14 are all greater than or equal to 1.

As an optional embodiment, the end time of the switching Gap includes at least one of the following:
seventh time obtained from the start time of the switching Gap + the duration of the switching Gap;
the X15^{th} time unit after the seventh time;
the X16^{th} time unit before the seventh time;
eighth time obtained from the start time of the switching Gap + the duration of the AI model switching;
the X17^{th} time unit after the eighth time;
the X18^{th} time unit before the eighth time;
ninth time when the AI model is switched;
the X19^{th} time unit after the ninth time;
the X20^{th} time unit before the ninth time;
tenth time of the first indication information applicable to the second AI model sent by the first communication device;
the X21^{th} time unit after the tenth time;
the X22^{th} time unit before the tenth time;
eleventh time when the second communication device receives the first indication information;
the X23^{th} time unit after the eleventh time;
the X24^{th} time unit before the eleventh time;
twelfth time when the second communication device feeds back the confirmation information after the first communication device sends the first indication information;
the X25^{th} time unit after the twelfth time;
the X26^{th} time unit before the twelfth time;
thirteenth time when the first communication device receives the confirmation information fed back by the second communication device after the first communication device sends the first indication information;
the X27^{th} time unit after the thirteenth time; and
the X28^{th} time unit before the thirteenth time,
where X15-X28 are all greater than or equal to 1.

In the embodiments of this application, the second communication device indicates the first communication device to perform AI model switching. In a case that there is the switching Gap in the AI model switching, the operation of the first communication device in the switching Gap is restricted, the influence of the AI model switching on the communication system is reduced, and the performance of the AI model in the communication system is improved, so that the system performance is improved.

It is to be noted that the AI model switching processing apparatus provided in the embodiment of this application is the apparatus capable to execute the AI model switching processing method, so that embodiments of the AI model switching processing method are all applicable to the AI model switching processing apparatus and may achieve the same or similar beneficial effects.

Referring to FIG. 5, FIG. 5 is a schematic structural diagram of the AI model switching processing apparatus 500 provided in the embodiment of this application. The AI model switching processing apparatus 500 includes:
a sending module 501, configured to send the configuration information of the switching Gap to the first communication device, where the configuration information of the switching Gap includes at least one of the following:
a content of the first operation, where the first operation is an operation of switching, by the first communication device, the switching Gap between the first AI model and the second AI model;
a content of the second operation, where the second operation is an operation of the first communication device in a case that there is no switching Gap or the switching Gap is ended;
a start time of the switching Gap;
an end time of the switching Gap;
a duration of the switching Gap;
a period of the switching Gap;
whether there is the switching Gap; and
a communication process applicable to the switching Gap.

As an optional embodiment, the first operation includes at least one of the following:
the first communication device does not perform calculation of the first AI model and the second AI model;
the first communication device stops using the AI arithmetic unit;
the first communication device calculates the first AI model, a calculation result being applicable or valid;
the first communication device calculates the first AI model and/or the second AI model, a calculation result being inapplicable or invalid; and
the first communication device stops using the AI arithmetic unit and a communication module associated with the AI arithmetic unit.

As an optional embodiment, the first operation further includes at least one of the following:
the first communication device performs calculation by using a non-AI algorithm corresponding to the first AI model; and
the first communication device performs calculation by using a non-AI algorithm corresponding to the second AI model.

As an optional embodiment, the second operation further includes any one of the following:
the first communication device performs calculation by using the second AI model;
the first communication device sends first indication information applicable to the second AI model to the second communication device, and performs calculation by using the second AI model behind X1 time units; and
the first communication device sends the first indication information applicable to the second AI model to the second communication device, receives confirmation information of the first indication information, and performs calculation by using the second AI model upon receiving X2 time units of the confirmation information,
where the X1 and X2 are both greater than or equal to 0.

As an optional embodiment, the apparatus further includes:
a third determination module, configured to determine the configuration information of the switching Gap used by the first communication device according to a first information, where the first information includes at least one of the following:
type difference information of the first AI model and the second AI model;
structural difference information of the first AI model and the second AI model;
parameter variable quantities of the first AI model and the second AI model;
a total capability or a total resource of the AI arithmetic unit of the first communication device; and
a surplus capability or a surplus resource of the AI arithmetic unit of the first communication device.

As an optional embodiment, the apparatus further includes:
an information receiving module, configured to receive the first information sent by the first communication device.

As an optional embodiment, the capability or the resource of the AI arithmetic unit includes at least one of the following:
an arithmetic capacity;
computability or computing power;
floating point computing power;
a process count;
a thread count;
a memory;
storage space;
a cache;
input channel information; and
output channel information.

As an optional embodiment, the communication process applicable to the switching Gap includes at least one of the following:
cell switching;
cell redirecting;
Radio Resource Control (RRC) reconfiguring;
RRC releasing;
RRC restoring;
RRC rebuilding;
RRC building;
gap measuring; and
gap configuration measuring.

As an optional embodiment, the start time of the switching Gap includes at least one of the following:
first time for indicating the first communication device to perform the AI model switching;
the X3^{th} time unit after the first time;
the X4^{th} time unit before the first time;
second time when the second AI model information is received;
the X5^{th} time unit after the second time;
the X6^{th} time unit before the second time;
third time when the confirmation information is sent after the second AI model information is received;
the X7^{th} time unit after the third time;
the X8^{th} time unit before the third time;
fourth time when the second communication device receives the confirmation information of the second AI model information;
the X9^{th} time unit after the fourth time;
the X10^{th} time unit before the fourth time;
fifth time when the first AI model is invalid;
the X11^{th} time unit after the fifth time;
the X12^{th} time unit before the fifth time;
sixth time when the second AI model is expected to be valid;
the X13^{th} time unit after the sixth time; and
the X14^{th} time unit before the sixth time,
where X3-X14 are all greater than or equal to 1.

As an optional embodiment, the end time of the switching Gap includes at least one of the following:
seventh time obtained from the start time of the switching Gap + the duration of the switching Gap;
the X15^{th} time unit after the seventh time;
the X16^{th} time unit before the seventh time;
eighth time obtained from the start time of the switching Gap + the duration of the AI model switching;
the X17^{th} time unit after the eighth time;
the X18^{th} time unit before the eighth time;
ninth time when the AI model is switched;
the X19^{th} time unit after the ninth time;
the X20^{th} time unit before the ninth time;
tenth time of the first indication information applicable to the second AI model sent by the first communication device;
the X21^{th} time unit after the tenth time;
the X22^{th} time unit before the tenth time;
eleventh time when the second communication device receives the first indication information;
the X23^{th} time unit after the eleventh time;
the X24^{th} time unit before the eleventh time;
twelfth time when the second communication device feeds back the confirmation information after the first communication device sends the first indication information;
the X25^{th} time unit after the twelfth time;
the X26^{th} time unit before the twelfth time;
thirteenth time when the first communication device receives the confirmation information fed back by the second communication device after the first communication device sends the first indication information;
the X27^{th} time unit after the thirteenth time; and
the X28^{th} time unit before the thirteenth time,
where X15-X28 are all greater than or equal to 1.

As an optional embodiment, the sending module includes:
a request receiving sub-module, configured to receive a Gap request message sent by the first communication device; and
a sending sub-module, configured to send the configuration information of the switching Gap to the first communication device according to the Gap request message.

In the embodiments of this application, the second communication device indicates the first communication device to perform AI model switching. In a case that there is the switching Gap in the AI model switching, the operation of the first communication device in the switching Gap is restricted, the influence of the AI model switching on the communication system is reduced, and the performance of the AI model in the communication system is improved, so that the system performance is improved.

It is to be noted that the AI model switching processing apparatus provided in the embodiment of this application is the apparatus capable to execute the AI model switching processing method, so that embodiments of the AI model switching processing method are all applicable to the AI model switching processing apparatus and may achieve the same or similar beneficial effects.

The AI model switching processing apparatus in the embodiment of this application may be either an electronic device, for example, an electronic device with an operating system, or a component in the electronic device, for example, an integrated circuit or a chip. The electronic device may be either a terminal or another device except for the terminal. Exemplarily, the terminal may include, but not limited to, the type of the terminal 11 enumerated, and the another device may be a server, a Network Attached Storage (Network Attached Storage, NAS) and the like, which are not specifically limited in the embodiment of this application.

The AI model switching processing apparatus provided in the embodiment of this application can implement each process implemented by the method embodiments shown in FIG. 1 to FIG. 3. To avoid repetition, details are not described herein again.

Optionally, as shown in FIG. 6, the embodiment of this application further provides a communication device 600, including a processor 601 and a memory 602, the memory 602 storing programs or instructions runnable on the processor 601, where, for example, in a case that the communication device 600 is the terminal, when executed by the processor 601, the programs or instructions implement the steps of the embodiment of the AI model switching processing method and can achieve the same technical effect. In a case that the communication device 600 is the network-side device, the programs or instructions, when executed by the processor 601, achieve various processes of the embodiment of the AI model switching processing method and can achieve the same technical effect. To avoid repetition, details are not described herein again.

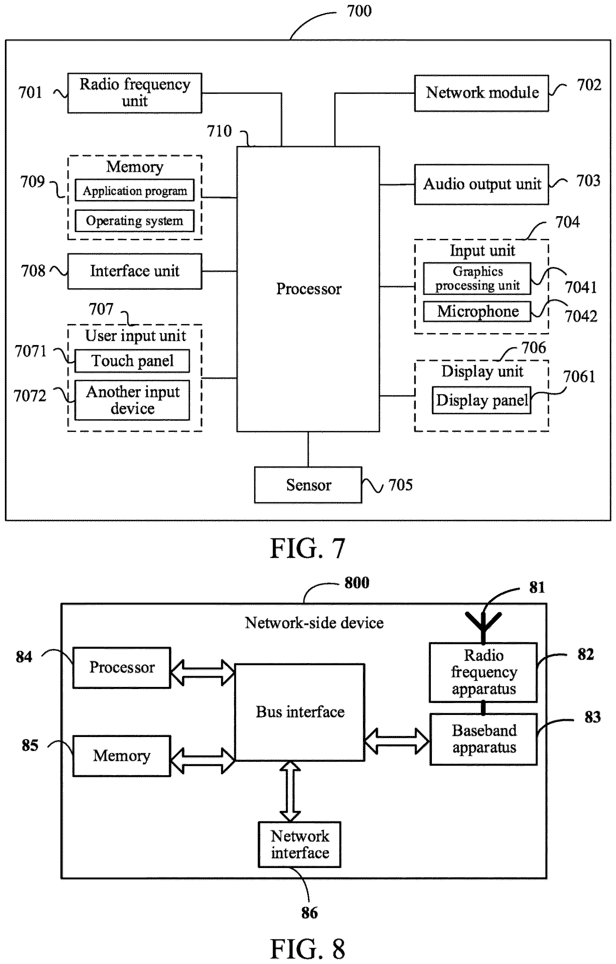

The embodiment of this application further provides a terminal, including a processor and a communication interface, where the communication interface is configured to receive switching indication information sent by a second communication device, the switching indication information being used for indicating the first communication device to perform AI model switching; and a processor is configured to, in a case that there is a switching Gap in switching between a first AI model and a second AI model, execute a first operation in the switching Gap, where the first operation includes any one of the following: calculation of the first AI model and the second AI model is not performed; using an AI arithmetic unit is stopped; calculation of the first AI model is performed, a calculation result being applicable or valid; calculation of the first AI model and/or the second AI model is performed, a calculation result being inapplicable or invalid; and using the AI arithmetic unit and a communication module associated with the AI arithmetic unit is stopped. Or, the communication interface is configured to send the configuration information of the switching Gap to the first communication device, where the configuration information of the switching Gap includes at least one of the following: a content of the first operation, where the first operation is an operation of the first communication device in the switching Gap; a content of the second operation, where the second operation is an operation of the first communication device in a case that there is no switching Gap or the switching Gap is ended; a start time of the switching Gap; an end time of the switching Gap; a duration of the switching Gap; a period of the switching Gap; whether there is the switching Gap; and a communication process applicable to the switching Gap. The terminal embodiment corresponds to the method embodiment at the terminal side, and various implementation processes and implementations of the above method embodiment are applicable to the terminal embodiment and can achieve the same technical effect. Specifically, FIG. 7 is a schematic structural diagram of hardware of a terminal implementing the embodiment of this application.

The terminal 700 includes, but not limited to: at least part of components such as a radio frequency unit 701, a network module 702, an audio output unit 703, an input unit 704, a sensor 705, a display unit 706, a user input unit 707, an interface unit 708, a memory 709 and a processor 710.

Those in the skill may understand that the terminal 700 may further include a power supply (such as a battery) for supplying power to the components. The power supply may be logically connected to the processor 710 by a power management system, thereby implementing functions such as charging, discharging, and power consumption management by using the power management system. The terminal shown in FIG. 7 does not constitute a limitation on the terminal, and the terminal may include more or fewer components than shown, or combine some components, or have different component arrangements, which are not described herein in detail.

It is to be understood that in the embodiment of this application, the input unit 704 may include a Graphics Processing Unit (Graphics Processing Unit, GPU) 7041 and a microphone 7042. The graphics processing unit 7041 performs processing on image data of a static picture or a video that is obtained by an image acquisition device (for example, a camera) in a video acquisition mode or an image acquisition mode. The display unit 706 may include a display panel 7061. The display panel 7061 may be configured in the form of a Liquid Crystal Display (LCD) and an Organic Light-Emitting Diode (OLED). The user input unit 707 includes at least one of a touch panel 7071 and another input device 7072. The touch panel 7071 is also known as a touch screen. The touch panel 7071 may include two parts: a touch detection apparatus and a touch controller. The another input device 7072 may include, but not limited to, a physical keyboard, a functional key (such as a volume control key or a switch key), a track ball, a mouse, and a joystick, which are not described herein in detail.

In the embodiment of this application, after the radio frequency unit 701 receives the downlink data from the network-side device, the downlink data may be sent to the processor 710 for processing; in addition, the radio frequency unit 701 may send the uplink data to the network-side device. Generally, the radio frequency unit 701 includes, but is not limited to, an antenna, an amplifier, a transceiver, a coupler, a low noise amplifier, a duplexer, and the like.

The memory 709 may be configured to store a software program and various data. The memory 709 may mainly include a first storage area storing the programs or instructions and a second storage area storing the data. The first storage area may store an operating system, application programs or instructions (for example, a sound playback function and an image playback function) required by at least one function, and the like. In addition, the memory 709 may include a volatile memory or a non-volatile memory, or the memory 709 may include both a volatile memory and a non-volatile memory. The non-volatile memory may be a Read-Only Memory (Read-Only Memory, ROM), a Programmable Read-Only Memory (Programmable ROM, PROM), an Erasable Programmable Read-Only Memory (Erasable PROM, EPROM), an Electrically Erasable Programmable Read-Only Memory (Electrically EPROM, EEPROM) or a flash memory. The non-volatile memory may be a Random Access Memory (Random Access Memory, RAM), a Static Random Access Memory (Static RAM, SRAM) a Dynamic Random Access Memory (Dynamic RAM, DRAM), a Synchronous Dynamic Random Access Memory (Synchronous DRAM, SDRAM), a Double Data Rate Synchronous Dynamic Random Access Memory (Double Data Rate SDRAM, DDR SDRAM), an Enhanced Synchronous Dynamic Random Access Memory (Enhanced SDRAM, ESDRAM), a Synchronous Link Dynamic Random Access Memory (Synchronous Link DRAM, SLDRAM), and a Direct Rambus Random Access Memory (Direct Rambus RAM, DRRAM). The memory 709 in the embodiment of this application includes, but not limited to, these memories and any other suitable types.

The processor 710 may include one or more processing units; optionally, the processor 710 may integrate an application processor and a modem processor, where the application processor mainly processes operations involving an operating system, a user interface, an application program, and the like, and the modem processor mainly processes wireless communication signals, for example, a baseband processor. It may be understood that, the modem processor may alternatively not be integrated in the processor 710.

The radio frequency unit 701 is configured to receive switching indication information sent by a second communication device, where the switching indication information is used for indicating the first communication device to perform AI model switching; and
the processor 710 is configured to, in a case that there is a switching Gap in switching between a first AI model and a second AI model, execute a first operation in the switching Gap, where the first operation includes any one of the following: calculation of the first AI model and the second AI model is not performed; using an AI arithmetic unit is stopped; calculation of the first AI model is performed, a calculation result being applicable or valid; calculation of the first AI model and/or the second AI model is performed, a calculation result being inapplicable or invalid; and using the AI arithmetic unit and a communication module associated with the AI arithmetic unit is stopped.

Or, the radio frequency unit 701 is configured to send the configuration information of the switching Gap to the first communication device, where the configuration information of the switching Gap includes at least one of the following: a content of the first operation, where the first operation is an operation of the first communication device in the switching Gap; a content of the second operation, where the second operation is an operation of the first communication device in a case that there is no switching Gap or the switching Gap is ended; a start time of the switching Gap; an end time of the switching Gap; a duration of the switching Gap; a period of the switching Gap; whether there is the switching Gap; and a communication process applicable to the switching Gap.

In the embodiments of this application, the second communication device indicates the first communication device to perform AI model switching. In a case that there is the switching Gap in the AI model switching, the operation of the first communication device in the switching Gap is restricted, the influence of the AI model switching on the communication system is reduced, and the performance of the AI model in the communication system is improved, so that the system performance is improved.

It is to be noted that the terminal provided in the embodiment of this application is the terminal capable to execute the AI model switching processing method, so that embodiments of the AI model switching processing method are all applicable to the terminal and can achieve the same or similar beneficial effects.

The embodiment of this application further provides a network-side device, including a processor and a communication interface, where the communication interface is configured to receive switching indication information sent by a second communication device, the switching indication information being used for indicating the first communication device to perform AI model switching; and a processor is configured to, in a case that there is a switching Gap in switching between a first AI model and a second AI model, execute a first operation in the switching Gap, where the first operation includes any one of the following: calculation of the first AI model and the second AI model is not performed; using an AI arithmetic unit is stopped; calculation of the first AI model is performed, a calculation result being applicable or valid; calculation of the first AI model and/or the second AI model is performed, a calculation result being inapplicable or invalid; and using the AI arithmetic unit and a communication module associated with the AI arithmetic unit is stopped. Or, the communication interface is configured to send the configuration information of the switching Gap to the first communication device, where the configuration information of the switching Gap includes at least one of the following: a content of the first operation, where the first operation is an operation of the first communication device in the switching Gap; a content of the second operation, where the second operation is an operation of the first communication device in a case that there is no switching Gap or the switching Gap is ended; a start time of the switching Gap; an end time of the switching Gap; a duration of the switching Gap; a period of the switching Gap; whether there is the switching Gap; and a communication process applicable to the switching Gap. The network-side device embodiment corresponds to the method embodiment at the terminal side, and various implementation processes and implementations of the above method embodiment are applicable to the network-side device embodiment and can achieve the same technical effect.

Specifically, the embodiment of the present application further provides a network-side device. As shown in FIG. 8, the network-side device 800 includes: an antenna 81, a radio frequency apparatus 82, a baseband apparatus 83, a processor 84 and a memory 85. The antenna 81 is connected to the radio frequency apparatus 82. In an uplink direction, the radio frequency apparatus 82 receives information through the antenna 81 and sends the received information to the baseband apparatus 83 for processing. In a downlink direction, the baseband apparatus 83 processes information to be sent and sends the information to the radio frequency apparatus 82. The received information processed by the radio frequency apparatus 82 is sent through the antenna 81.

The method executed by the network-side device in the above embodiments may be implemented in the baseband apparatus 83. The baseband apparatus 83 includes a baseband processor.

The baseband apparatus 83 may, for example, include at least one baseband board. A plurality of chips are arranged on the baseband board. As shown in FIG. 8, one of the chips is, for example, the baseband processor connected to the memory 85 through a bus interface to call the program in the memory 85, so as to execute the network device operation shown in the above method embodiment.

The network-side device may further include a network interface 86. The interface is, for example, a Common Public Radio Interface (Common Public Radio Interface, CPRI).

Specifically, the network-side device 800 in the embodiment of this application further includes: instructions or programs stored in the memory 85 and runnable in the processor 84, where the processor 84 calls the instructions or programs in the memory 85 to execute the method executed by the modules in FIG. 4 or FIG. 5, and achieves the same technical effect. To avoid repetition, details are not described herein again.

The embodiment of this application further provides a readable storage medium, storing programs or instructions, the programs or instructions, where when executed by a processor, implement various processes of the AI model switching processing method embodiment and can achieve the same technical effect. To avoid repetition, details are not described herein again.

The processor is the processor in the terminal in the above embodiments. The readable storage medium includes a computer readable storage medium such as a Read-Only Memory (ROM), a Random Access Memory (RAM), a magnetic disk, or an optical disc.

This embodiment of this application further provides a chip, including a processor and a communication interface, where the communication interface is coupled to the processor, and the processor is configured to run programs or instructions to implement various process of the AI model switching processing method embodiment and can achieve the same technical effect. To avoid repetition, details are not described herein again.

It is to be understood that the chip mentioned in this embodiment of this application may also be called a system-level chip, a system chip, a chip system or a system-on-chip, etc.

The embodiment of this application further provides a computer program product, stored in a storage medium, where the computer program product, when executed by at least one processor, implements various processes of the AI model switching processing method embodiment and can achieve the same technical effect. To avoid repetition, details are not described herein again.

The embodiment of this application further provides a wireless communication system, including: a first communication device and a second communication device, where the first communication device may be configured to execute the steps of the AI model switching processing method and the second communication device may be configured to execute the steps of the AI model switching processing method.

It is to be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it is to be pointed out that the scopes of the method and apparatus in the implementations of this application are not limited and functions are executed according to the illustrated or discussed sequence. The functions may also be executed in a basically simultaneous way or in a reverse sequence based on the functions involved. For example, the described method may be executed according to a sequence different from the described sequence, and various steps may further be added, omitted or combined. In addition, features described in some examples may also be combined in other examples.

According to the descriptions in the above implementations, those skilled in the art may clearly learn that the method in the above embodiment may be implemented by using software and a necessary universal hardware platform or by using hardware. Of course, the method may also be implemented by hardware. In most cases, the former is the better implementation. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal device (which may be a mobile phone, a computer, a server, a network device, or the like) to perform the methods described in the embodiments of this application.

The embodiments of this application have been described above with reference to the drawings. This application is not limited to the detailed description described above, and the detailed description described above are merely exemplary rather than limitative. Those of ordinary skill in the art may make various variations under the teaching of this application without departing from the spirit of this application and the protection scope of the claims, and such variations shall all fall within the protection scope of this application.

## Claims

1. An Artificial Intelligence (AI) model switching processing method, comprising:
receiving, by a first communication device, switching indication information sent by a second communication device, wherein the switching indication information is used for indicating the first communication device to perform AI model switching; and
in a case that there is a switching Gap in switching between a first AI model and a second AI model, executing, by the first communication device, a first operation in the switching Gap, wherein the first operation comprises any one of the following:
not performing calculation of the first AI model and the second AI model;
stopping using an AI arithmetic unit;
performing calculation of the first AI model, a calculation result being applicable or valid;
performing calculation of the first AI model and/or the second AI model, a calculation result being inapplicable or invalid; and
stopping using the AI arithmetic unit and a communication module associated with the AI arithmetic unit.

2. The method according to claim 1, wherein the first operation further comprises any one of the following:
performing calculation by using a non-AI algorithm corresponding to the first AI model; and
performing calculation by using a non-AI algorithm corresponding to the second AI model.

3. The method according to claim 1, wherein the method further comprises:
in a case that there is no switching Gap in switching between the first AI model and the second AI model or the switching Gap is ended, executing, by the first communication device, a second operation, wherein the second operation comprises any one of the following:
performing calculation by using the second AI model;
sending first indication information applicable to the second AI model to the second communication device, and performing calculation by using the second AI model behind X1 time units; and
sending the first indication information applicable to the second AI model to the second communication device, receiving confirmation information of the first indication information, and performing calculation by using the second AI model upon receiving X2 time units of the confirmation information,
where the X1 and X2 are both greater than or equal to 0.

4. The method according to claim 1, wherein the method further comprises:
determining, by the first communication device, the configuration information of the switching Gap, and the configuration information of the switching Gap comprises at least one of the following:
a content of the first operation;
a content of the second operation;
a start time of the switching Gap;
an end time of the switching Gap;
a duration of the switching Gap;
a period of the switching Gap;
whether there is the switching Gap; and
a communication process applicable to the switching Gap.

5. The method according to claim 4, wherein the step of determining, by the first communication device, the configuration information of the switching Gap comprises:
receiving, by the first communication device, the configuration information of the switching Gap indicated by the second communication device;
or,
sending, by the first communication device, a Gap request message to the second communication device according to a function request of another communication device, and receiving, by the first communication device, the configuration information of the switching Gap returned by the second communication device;
or,
sending, by the first communication device, the configuration information of the switching Gap to the second communication device;
or,
determining, by the first communication device, the used configuration information of the switching Gap according to a preengagement;
or,
determining, by the first communication device, a plurality of pieces of configuration information of the switching Gap according to the preengagement, and receiving the indication of the first communication device and determining the used configuration information of the switching Gap.

6. The method according to claim 1, wherein the method further comprises:
determining, by the first communication device, whether there is the switching Gap between the first AI model and the second AI model and/or the duration of the switching Gap,
wherein the first information includes at least one of the following:
type difference information of the first AI model and the second AI model;
structural difference information of the first AI model and the second AI model;
parameter variable quantities of the first AI model and the second AI model;
a total capability or a total resource of the AI arithmetic unit of the first communication device; and
a surplus capability or a surplus resource of the AI arithmetic unit of the first communication device.

7. The method according to claim 6, wherein the capability or the resource of the AI arithmetic unit comprises at least one of the following:
an arithmetic capacity;
computability or computing power;
floating point computing power;
a process count;
a thread count;
a memory;
storage space;
a cache;
input channel information; and
output channel information.

8. The method according to claim 6, wherein the method further comprises:
in a case that the first information meets a preset condition, sending, by the first communication device, the first information to the second communication device;
or,
in a case that target triggering is met, sending, by the first communication device, the first information to the second communication device;
or,
periodically sending, by the first communication device, the first information to the second communication device.

9. The method according to claim 1 or 4, wherein the communication process applicable to the switching Gap comprises at least one of the following:
cell switching;
cell redirecting;
Radio Resource Control (RRC) reconfiguring;
RRC releasing;
RRC restoring;
RRC rebuilding;
RRC building;
gap measuring; and
gap configuration measuring.

10. The method according to claim 9, wherein the duration of the switching Gap is less than or equal to any one of the following:
a cell switching delay;
a cell redirecting delay;
an RRC reconfiguring delay;
an RRC rebuilding delay;
an RRC building delay; and
a time span for measuring the gap.

11. The method according to claim 9, wherein the step of determining, by the first communication device, the configuration information of the switching Gap comprises:
determining, by the first communication device, the configuration information of the switching Gap according to a first message, wherein the first message comprises at least one of the following:
an RRC reconfiguring message;
an RRC releasing message;
an RRC restoring message;
an RRC rebuilding message; and
an RRC building message.

12. The method according to claim 1 or 4, wherein the start time of the switching Gap comprises at least one of the following:
first time for indicating the first communication device to perform the AI model switching;
the X3^{th} time unit after the first time;
the X4^{th} time unit before the first time;
second time when the second AI model information is received;
the X5^{th} time unit after the second time;
the X6^{th} time unit before the second time;
third time when the confirmation information is sent after the second AI model information is received;
the X7^{th} time unit after the third time;
the X8^{th} time unit before the third time;
fourth time when the second communication device receives the confirmation information of the second AI model information;
the X9^{th} time unit after the fourth time;
the X10^{th} time unit before the fourth time;
fifth time when the first AI model is invalid;
the X11^{th} time unit after the fifth time;
the X12^{th} time unit before the fifth time;
sixth time when the second AI model is expected to be valid;
the X13^{th} time unit after the sixth time; and
the X14^{th} time unit before the sixth time,
where X3-X14 are all greater than or equal to 1.

13. The method according to claim 1 or 4, wherein the end time of the switching Gap comprises at least one of the following:
seventh time obtained from the start time of the switching Gap + the duration of the switching Gap;
the X15^{th} time unit after the seventh time;
the X16^{th} time unit before the seventh time;
eighth time obtained from the start time of the switching Gap + the duration of the AI model switching;
the X17^{th} time unit after the eighth time;
the X18^{th} time unit before the eighth time;
ninth time when the AI model is switched;
the X19^{th} time unit after the ninth time;
the X20^{th} time unit before the ninth time;
tenth time of the first indication information applicable to the second AI model sent by the first communication device;
the X21^{th} time unit after the tenth time;
the X22^{th} time unit before the tenth time;
eleventh time when the second communication device receives the first indication information;
the X23^{th} time unit after the eleventh time;
the X24^{th} time unit before the eleventh time;
twelfth time when the second communication device feeds back the confirmation information after the first communication device sends the first indication information;
the X25^{th} time unit after the twelfth time;
the X26^{th} time unit before the twelfth time;
thirteenth time when the first communication device receives the confirmation information fed back by the second communication device after the first communication device sends the first indication information;
the X27^{th} time unit after the thirteenth time; and
the X28^{th} time unit before the thirteenth time,
where X15-X28 are all greater than or equal to 1.

14. An Artificial Intelligence (AI) model switching processing method, comprising:
sending, by a second communication device, the configuration information of the switching Gap to a first communication device, wherein the configuration information of the switching Gap comprises at least one of the following:
a content of a first operation, wherein the first operation is an operation of switching, by the first communication device, the switching Gap between a first AI model and a second AI model;
a content of a second operation, wherein the second operation is an operation of the first communication device in a case that there is no switching Gap or the switching Gap is ended;
a start time of the switching Gap;
an end time of the switching Gap;
a duration of the switching Gap;
a period of the switching Gap;
whether there is the switching Gap; and
a communication process applicable to the switching Gap.

15. The method according to claim 14, wherein the first operation comprises any one of the following:
not performing, by the first communication device, calculation of the first AI model and the second AI model;
stopping, by the first communication device, using the AI arithmetic unit;
calculating, by the first communication device, the first AI model, a calculation result being applicable or valid;
calculating, by the first communication device, the first AI model and/or the second AI model, a calculation result being inapplicable or invalid; and
stopping, by the first communication device, using the AI arithmetic unit and a communication module associated with the AI arithmetic unit.

16. The method according to claim 15, wherein the first operation further comprises any one of the following:
performing, by the first communication device, calculation by using a non-AI algorithm corresponding to the first AI model; and
performing, by the first communication device, calculation by using a non-AI algorithm corresponding to the second AI model.

17. The method according to claim 14, wherein the second operation comprises any one of the following:
performing, by the first communication device, calculation by using the second AI model;
sending, by the first communication device, first indication information applicable to the second AI model to the second communication device, and performing calculation by using the second AI model behind X1 time units; and
sending, by the first communication device, the first indication information applicable to the second AI model to the second communication device, receiving confirmation information of the first indication information, and performing calculation by using the second AI model upon receiving X2 time units of the confirmation information,
where the X1 and X2 are both greater than or equal to 0.

18. The method according to claim 14, wherein the method further comprises:
determining, by the second communication device, the configuration information of the switching Gap used by the first communication device according to a first information, wherein the first information includes at least one of the following:
type difference information of the first AI model and the second AI model;
structural difference information of the first AI model and the second AI model;
parameter variable quantities of the first AI model and the second AI model;
a total capability or a total resource of the AI arithmetic unit of the first communication device; and
a surplus capability or a surplus resource of the AI arithmetic unit of the first communication device.

19. The method according to claim 18, wherein the method further comprises:
receiving, by the second communication device, the first information sent by the first communication device.

20. The method according to claim 18, wherein the capability or the resource of the AI arithmetic unit comprises at least one of the following:
an arithmetic capacity;
computability or computing power;
floating point computing power;
a process count;
a thread count;
a memory;
storage space;
a cache;
input channel information; and
output channel information.

21. The method according to claim 14, wherein the communication process applicable to the switching Gap comprises at least one of the following:
cell switching;
cell redirecting;
Radio Resource Control (RRC) reconfiguring;
RRC releasing;
RRC restoring;
RRC rebuilding;
RRC building;
gap measuring; and
gap configuration measuring.

22. The method according to claim 14, wherein the start time of the switching Gap comprises at least one of the following:
first time for indicating the first communication device to perform the AI model switching;
the X3^{th} time unit after the first time;
the X4^{th} time unit before the first time;
second time when the second AI model information is received;
the X5^{th} time unit after the second time;
the X6^{th} time unit before the second time;
third time when the confirmation information is sent after the second AI model information is received;
the X7^{th} time unit after the third time;
the X8^{th} time unit before the third time;
fourth time when the second communication device receives the confirmation information of the second AI model information;
the X9^{th} time unit after the fourth time;
the X10^{th} time unit before the fourth time;
fifth time when the first AI model is invalid;
the X11^{th} time unit after the fifth time;
the X12^{th} time unit before the fifth time;
sixth time when the second AI model is expected to be valid;
the X13^{th} time unit after the sixth time; and
the X14^{th} time unit before the sixth time,
where X3-X14 are all greater than or equal to 1.

23. The method according to claim 14, wherein the end time of the switching Gap comprises at least one of the following:
seventh time obtained from the start time of the switching Gap + the duration of the switching Gap;
the X15^{th} time unit after the seventh time;
the X16^{th} time unit before the seventh time;
eighth time obtained from the start time of the switching Gap + the duration of the AI model switching;
the X17^{th} time unit after the eighth time;
the X18^{th} time unit before the eighth time;
ninth time when the AI model is switched;
the X19^{th} time unit after the ninth time;
the X20^{th} time unit before the ninth time;
tenth time of the first indication information applicable to the second AI model sent by the first communication device;
the X21^{th} time unit after the tenth time;
the X22^{th} time unit before the tenth time;
eleventh time when the second communication device receives the first indication information;
the X23^{th} time unit after the eleventh time;
the X24^{th} time unit before the eleventh time;
twelfth time when the second communication device feeds back the confirmation information after the first communication device sends the first indication information;
the X25^{th} time unit after the twelfth time;
the X26^{th} time unit before the twelfth time;
thirteenth time when the first communication device receives the confirmation information fed back by the second communication device after the first communication device sends the first indication information;
the X27^{th} time unit after the thirteenth time; and
the X28^{th} time unit before the thirteenth time,
where X15-X28 are all greater than or equal to 1.

24. The method according to claim 14, wherein the step of sending, by the second communication device, the configuration information of the switching Gap to the first communication device comprises:
receiving, by the second communication device, a Gap request message sent by the first communication device; and
sending, by the second communication device, the configuration information of the switching Gap to the first communication device according to the Gap request message.

25. An Artificial Intelligence (AI) model switching processing apparatus, comprising:
a receiving module, configured to receive switching indication information sent by a second communication device, wherein the switching indication information is used for indicating a first communication device to perform AI model switching; and
a first executing module, configured to, in a case that there is a switching Gap in switching between a first AI model and a second AI model, execute a first operation in the switching Gap, wherein the first operation comprises any one of the following:
not performing calculation of the first AI model and the second AI model;
stopping using an AI arithmetic unit;
performing calculation of the first AI model, a calculation result being applicable or valid;
performing calculation of the first AI model and/or the second AI model, a calculation result being inapplicable or invalid; and
stopping using the AI arithmetic unit and a communication module associated with the AI arithmetic unit.

26. The apparatus according to claim 25, wherein the first operation further comprises any one of the following:
performing calculation by using a non-AI algorithm corresponding to the first AI model; and
performing calculation by using a non-AI algorithm corresponding to the second AI model.

27. The apparatus according to claim 25, wherein the apparatus further comprises:
a second executing module, configured to, in a case that there is no switching Gap in switching between the first AI model and the second AI model or the switching Gap is ended, execute a second operation, wherein the second operation comprises any one of the following:
performing calculation by using the second AI model;
sending first indication information applicable to the second AI model to the second communication device, and performing calculation by using the second AI model behind X1 time units; and
sending the first indication information applicable to the second AI model to the second communication device, receiving confirmation information of the first indication information, and performing calculation by using the second AI model upon receiving X2 time units of the confirmation information,
where the X1 and X2 are both greater than or equal to 0.

28. The apparatus according to claim 25, wherein the apparatus further comprises:
a first determination module, configured to determine configuration information of the switching Gap, wherein the configuration information of the switching Gap comprises at least one of the following:
a content of the first operation;
a content of the second operation;
a start time of the switching Gap;
an end time of the switching Gap;
a duration of the switching Gap;
a period of the switching Gap;
whether there is the switching Gap; and
a communication process applicable to the switching Gap.

29. The apparatus according to claim 28, wherein the first determination module comprises:
a first determination sub-module, configured to receive the configuration information of the switching Gap indicated by the second communication device;
or, configured to send a Gap request message to the second communication device according to a function request of another communication device, and configured to receive the configuration information of the switching Gap returned by the second communication device;
or, configured to send the configuration information of the switching Gap to the second communication device;
or, configured to determine the used configuration information of the switching Gap according to a preengagement;
or, configured to determine a plurality of pieces of configuration information of the switching Gap according to the preengagement, and receive the indication of the first communication device and determines the used configuration information of the switching Gap.

30. The apparatus according to claim 25, wherein the apparatus further comprises:
a second determination sub-module, configured to determine whether there is the switching Gap between the first AI model and the second AI model and/or the duration of the switching Gap,
wherein the first information includes at least one of the following:
type difference information of the first AI model and the second AI model;
structural difference information of the first AI model and the second AI model;
parameter variable quantities of the first AI model and the second AI model;
a total capability or a total resource of the AI arithmetic unit of the first communication device; and
a surplus capability or a surplus resource of the AI arithmetic unit of the first communication device.

31. The apparatus according to claim 30, wherein the capability or the resource of the AI arithmetic unit comprises at least one of the following:
an arithmetic capacity;
computability or computing power;
floating point computing power;
a process count;
a thread count;
a memory;
storage space;
a cache;
input channel information; and
output channel information.

32. The apparatus according to claim 30, wherein the apparatus further comprises:
an information sending module, configured to, in a case that the first information meets a preset condition, send the first information to the second communication device;
or, configured to, in a case that target triggering is met, send the first information to the second communication device;
or, configured to periodically send the first information to the second communication device.

33. The apparatus according to claim 25 or 28, wherein the communication process applicable to the switching Gap comprises at least one of the following:
cell switching;
cell redirecting;
Radio Resource Control (RRC) reconfiguring;
RRC releasing;
RRC restoring;
RRC rebuilding;
RRC building;
gap measuring; and
gap configuration measuring.

34. The apparatus according to claim 33, wherein the duration of the switching Gap is less than or equal to any one of the following:
a cell switching delay;
a cell redirecting delay;
an RRC reconfiguring delay;
an RRC rebuilding delay;
an RRC building delay; and
a time span for measuring the gap.

35. The apparatus according to claim 33, wherein the first determination module comprises:
a second determination sub-module, configured to determine the configuration information of the switching Gap according to a first message, wherein the first message includes at least one of the following:
an RRC reconfiguring message;
an RRC releasing message;
an RRC restoring message;
an RRC rebuilding message; and
an RRC building message.

36. The apparatus according to claim 25 or 28, wherein the start time of the switching Gap comprises at least one of the following:
first time for indicating the first communication device to perform the AI model switching;
the X3^{th} time unit after the first time;
the X4^{th} time unit before the first time;
second time when the second AI model information is received;
the X5^{th} time unit after the second time;
the X6^{th} time unit before the second time;
third time when the confirmation information is sent after the second AI model information is received;
the X7^{th} time unit after the third time;
the X8^{th} time unit before the third time;
fourth time when the second communication device receives the confirmation information of the second AI model information;
the X9^{th} time unit after the fourth time;
the X10¹ time unit before the fourth time;
fifth time when the first AI model is invalid;
the X11^{th} time unit after the fifth time;
the X12^{th} time unit before the fifth time;
sixth time when the second AI model is expected to be valid;
the X13^{th} time unit after the sixth time; and
the X14^{th} time unit before the sixth time,
where X3-X14 are all greater than or equal to 1.

37. The apparatus according to claim 25 or 28, wherein the end time of the switching Gap comprises at least one of the following:
seventh time obtained from the start time of the switching Gap + the duration of the switching Gap;
the X15^{th} time unit after the seventh time;
the X16¹ time unit before the seventh time;
eighth time obtained from the start time of the switching Gap + the duration of the AI model switching;
the X17^{th} time unit after the eighth time;
the X18^{th} time unit before the eighth time;
ninth time when the AI model is switched;
the X19^{th} time unit after the ninth time;
the X20^{th} time unit before the ninth time;
tenth time of the first indication information applicable to the second AI model sent by the first communication device;
the X21^{th} time unit after the tenth time;
the X22^{th} time unit before the tenth time;
eleventh time when the second communication device receives the first indication information;
the X23^{th} time unit after the eleventh time;
the X24^{th} time unit before the eleventh time;
twelfth time when the second communication device feeds back the confirmation information after the first communication device sends the first indication information;
the X25^{th} time unit after the twelfth time;
the X26^{th} time unit before the twelfth time;
thirteenth time when the first communication device receives the confirmation information fed back by the second communication device after the first communication device sends the first indication information;
the X27^{th} time unit after the thirteenth time; and
the X28^{th} time unit before the thirteenth time,
where X15-X28 are all greater than or equal to 1.

38. An Artificial Intelligence (AI) model switching processing apparatus, comprising:
a sending module, configured to send the configuration information of the switching Gap to a first communication device, wherein the configuration information of the switching Gap comprises at least one of the following:
a content of a first operation, wherein the first operation is an operation of switching, by the first communication device, the switching Gap between a first AI model and a second AI model;
a content of a second operation, wherein the second operation is an operation of the first communication device in a case that there is no switching Gap or the switching Gap is ended;
a start time of the switching Gap;
an end time of the switching Gap;
a duration of the switching Gap;
a period of the switching Gap;
whether there is the switching Gap; and
a communication process applicable to the switching Gap.

39. The apparatus according to claim 38, wherein the first operation comprises any one of the following:
not performing, by the first communication device, calculation of the first AI model and the second AI model;
stopping, by the first communication device, using the AI arithmetic unit;
calculating, by the first communication device, the first AI model, a calculation result being applicable or valid;
calculating, by the first communication device, the first AI model and/or the second AI model, a calculation result being inapplicable or invalid; and
stopping, by the first communication device, using the AI arithmetic unit and a communication module associated with the AI arithmetic unit.

40. The apparatus according to claim 39, wherein the first operation further comprises any one of the following:
performing, by the first communication device, calculation by using a non-AI algorithm corresponding to the first AI model; and
performing, by the first communication device, calculation by using a non-AI algorithm corresponding to the second AI model.

41. The apparatus according to claim 38, wherein the second operation comprises any one of the following:
performing, by the first communication device, calculation by using the second AI model;
sending, by the first communication device, first indication information applicable to the second AI model to the second communication device, and performing calculation by using the second AI model behind X1 time units; and
sending, by the first communication device, the first indication information applicable to the second AI model to the second communication device, receiving confirmation information of the first indication information, and performing calculation by using the second AI model upon receiving X2 time units of the confirmation information,
where the X1 and X2 are both greater than or equal to 0.

42. The apparatus according to claim 38, wherein the apparatus further comprises:
a third determination module, configured to determine the configuration information of the switching Gap used by the first communication device according to a first information, wherein the first information includes at least one of the following:
type difference information of the first AI model and the second AI model;
structural difference information of the first AI model and the second AI model;
parameter variable quantities of the first AI model and the second AI model;
a total capability or a total resource of the AI arithmetic unit of the first communication device; and
a surplus capability or a surplus resource of the AI arithmetic unit of the first communication device.

43. The apparatus according to claim 42, wherein the apparatus further comprises:
an information receiving module, configured to receive the first information sent by the first communication device.

44. The apparatus according to claim 42, wherein the capability or the resource of the AI arithmetic unit comprises at least one of the following:
an arithmetic capacity;
computability or computing power;
floating point computing power;
a process count;
a thread count;
a memory;
storage space;
a cache;
input channel information; and
output channel information.

45. The apparatus according to claim 38, wherein the communication process applicable to the switching Gap comprises at least one of the following:
cell switching;
cell redirecting;
Radio Resource Control (RRC) reconfiguring;
RRC releasing;
RRC restoring;
RRC rebuilding;
RRC building;
gap measuring; and
gap configuration measuring.

46. The apparatus according to claim 38, wherein the start time of the switching Gap comprises at least one of the following:
first time for indicating the first communication device to perform the AI model switching;
the X3^{th} time unit after the first time;
the X4^{th} time unit before the first time;
second time when the second AI model information is received;
the X5^{th} time unit after the second time;
the X6^{th} time unit before the second time;
third time when the confirmation information is sent after the second AI model information is received;
the X7^{th} time unit after the third time;
the X8^{th} time unit before the third time;
fourth time when the second communication device receives the confirmation information of the second AI model information;
the X9^{th} time unit after the fourth time;
the X10^{th} time unit before the fourth time;
fifth time when the first AI model is invalid;
the X11^{th} time unit after the fifth time;
the X12^{th} time unit before the fifth time;
sixth time when the second AI model is expected to be valid;
the X13^{th} time unit after the sixth time; and
the X14^{th} time unit before the sixth time,
where X3-X14 are all greater than or equal to 1.

47. The apparatus according to claim 38, wherein the end time of the switching Gap comprises at least one of the following:
seventh time obtained from the start time of the switching Gap + the duration of the switching Gap;
the X15^{th} time unit after the seventh time;
the X16^{th} time unit before the seventh time;
eighth time obtained from the start time of the switching Gap + the duration of the AI model switching;
the X17^{th} time unit after the eighth time;
the X18^{th} time unit before the eighth time;
ninth time when the AI model is switched;
the X19^{th} time unit after the ninth time;
the X20^{th} time unit before the ninth time;
tenth time of the first indication information applicable to the second AI model sent by the first communication device;
the X21^{th} time unit after the tenth time;
the X22^{th} time unit before the tenth time;
eleventh time when the second communication device receives the first indication information;
the X23^{th} time unit after the eleventh time;
the X24^{th} time unit before the eleventh time;
twelfth time when the second communication device feeds back the confirmation information after the first communication device sends the first indication information;
the X25^{th} time unit after the twelfth time;
the X26^{th} time unit before the twelfth time;
thirteenth time when the first communication device receives the confirmation information fed back by the second communication device after the first communication device sends the first indication information;
the X27^{th} time unit after the thirteenth time; and
the X28^{th} time unit before the thirteenth time,
where X15-X28 are all greater than or equal to 1.

48. The apparatus according to claim 38, wherein the sending module comprises:
a request receiving sub-module, configured to receive a Gap request message sent by the first communication device; and
a sending sub-module, configured to send the configuration information of the switching Gap to the first communication device according to the Gap request message.

49. A first communication device, comprising a processor and a memory, the memory storing programs or instructions runnable on the processor, wherein the programs or the instructions, when executed by the processor, implement the steps of the AI model switching processing method according to any one of claims 1 to 13.

50. A second communication device, comprising a processor and a memory, the memory storing programs or instructions runnable on the processor, wherein the programs or the instructions, when executed by the processor, implement the steps of the AI model switching processing method according to any one of claims 14 to 24.

51. A computer readable storage medium, storing programs or instructions, wherein the programs or the instructions, when executed by the processor, implement the steps of the AI model switching processing method according to any one of claims 1 to 13 or the steps of the AI model switching processing method according to any one of claims 14 to 24.
